# EUROPEAN PATENT APPLICATION

(11) **EP 4 649 828 A1**
(43) Date of publication of application: **19.11.2025**
(21) Application number: 25176693.7
(22) Date of filing: 15.05.2025
(51) Int. Cl.: A21B 1/24, A21B 1/26, A21B 1/46, A21B 1/48, A21B 3/04

(54) **INDUSTRIAL OVEN AND METHOD FOR BAKING FOODSTUFFS**

(30) Priority: 16.05.2024 IT 202400011182
(71) Applicant: Spin Bake S.r.l., 66022 Fossacesia CH (IT)
(72) Inventor: DEPPIERI, Davide, 31021 Mogliano Veneto TV (IT); STEFANELLI, Pietro, 37039 Tregnago VR (IT)
(74) Representative: Manfrin, Marta

(57) **Abstract**

Industrial oven (10) for baking foodstuffs (100) arranged on respective support members (101), comprising a vertical baking single chamber (12), provided with chain transport means (26) configured to transport the support members (101) individually, with the respective foodstuffs (100), moving them vertically from one or more inlet doors (23) to one or more outlet doors (25) along at least one movement path (P).

## Description

### SCOPE OF APPLICATION

The present disclosure relates to an industrial oven for baking foodstuffs, such as bread, pizza, biscuits, crackers, or the like, arranged in support members, such as trays, pans, and/or molds. This disclosure also refers to the method of operation of such an industrial oven and, therefore, to the method of baking said foodstuffs.

### STATE OF THE ART

Industrial ovens are known for baking foodstuffs, such as bread, pizza, biscuits, crackers, or the like. Such ovens usually comprise a baking chamber, also called a single chamber, in which foodstuffs are advanced by transport means such as nets, belts, bars, or chains.

Foodstuffs can be arranged in direct contact with transport means, or they can first be placed in trays, pans, or molds, and then arranged on transport means.

Depending on the type of oven and specific requirements, the baking chamber can be horizontal type, or vertical type.

In the case of a horizontal single chamber, foodstuffs are transported following a horizontal main movement path.

In the case of a vertical single chamber, foodstuffs are transported by following a vertical main movement path, which may be upward, or downward. For example, foodstuffs can be moved vertically, in an ascending or descending manner, following a secondary movement path that can be spiral.

In general, transport is uniform and continuous, allowing control over baking time and heat distribution over the foodstuffs to be baked.

Baking processes are then used within the chamber to transmit heat aimed at removing moisture from the baked foodstuff. In general, heat can be transferred to the foodstuff by transmission mechanisms such as conduction, convection, or radiation.

In the case of conduction, electric heating elements, gas burners, or infrared heating elements can be used, or tube bundles with superheated air, steam, or diathermic oil inside that heat the conveying surface. These heat sources heat the baking chamber and directly or indirectly the foodstuff therein. In the case of foodstuffs such as bread, baking must be done indirectly.

In the case of convection, baking jets or streams of air, also known as "impinging jets," can be used, which are circulated at high speed within the single chamber. Usually, the jets or air flows are delivered at the sides of the chamber and do not exceed 3-4 m/s in speed.

In contrast, in the case of radiation, heat transmission occurs through the propagation of electromagnetic waves.

In some cases, a circuit defined by radiant tubes arranged below and above the transport means can also be used, wherein flows a diathermic oil, or superheated air, or steam, which transmits heat to the foodstuffs by means of radiation, or radiant energy. In addition, the oil, air, or steam, present within the circuit also heats by conduction the transport means, which, having reached a certain temperature, themselves become radiant energy emitting elements. It should also be kept in mind that within the chamber, heat transmission by convection is also formed in any case as heat moves from the coolest area, at the inlet, to the hottest area, at the outlet.

For example, industrial tunnel ovens with a horizontal single chamber are known wherein baked foodstuffs are arranged in direct contact with transport means, which may be a wire mesh or a conveyor belt, and wherein electric heating elements are used as the emitting device for baking the foodstuffs. Alternatively, hot air jets may be used in such ovens to bake the foodstuffs, or a circuit of pipes wherein diathermic oil, air or steam flows.

Alternatively, single or double spiral industrial ovens are also known, with a vertical single chamber, wherein the baked foodstuffs are transported on a metal mesh or conveyor belt, and wherein a circuit with diathermic oil or a convective exchanger device is used to transmit heat to the foodstuffs therein.

Industrial ovens comprising two consecutive single chambers, wherein a different heat transfer mechanism is used in each single chamber, are also known.

Many known solutions focus on optimizing one or more of these mechanisms to ensure uniform and efficient baking.

However, one of the main drawbacks of such known ovens is that attention is often focused only on optimizing heat transfer, neglecting the evaluation of the baking results. In fact, the importance of parameters such as specific volume, crust thickness, pH of the crust and the inside of the foodstuff, color, and other chemical-physical features of the foodstuff is often overlooked. These parameters are essential for determining the quality and market acceptability of the final foodstuff.

Furthermore, another drawback is that known ovens are often designed with only one type of foodstuff to be baked in mind, thus neglecting the variety and diversity of foodstuffs that could be baked. This can limit the flexibility and adaptability of such industrial ovens to changing market requirements.

In addition, optimizing heat transfer may not necessarily result in more efficient use of the oven, neglecting other factors such as energy consumption.

The technical problem that this disclosure aims to solve is that of creating an industrial oven for baking foodstuffs that allows them to be baked taking into account their final features and also optimizing heat transfer within the single chamber.

In particular, one purpose of this disclosure is to realize an industrial oven and develop a method for baking foodstuffs that takes into account the variety and diversity of foodstuffs themselves.

Another purpose of this disclosure is to realize an industrial oven and develop a method for baking foodstuffs that will allow different baking diagrams to be set up and varied.

A further purpose of this disclosure is to realize an industrial oven for baking foodstuffs that is efficient and allows for reduced energy consumption compared with state-of-the-art industrial ovens.

### SUMMARY

In order to solve the above technical problem and in accordance with the above purposes, achieving additional benefits, an industrial oven and a method for baking foodstuffs are provided according to the respective independent claims. Secondary features of the object of this disclosure are defined in corresponding dependent claims.

Specifically, the baking foodstuffs are arranged in respective support members and the industrial oven comprising a single chamber of vertical type provided with chain transport means configured to individually transport said support members, with said foodstuffs, moving them vertically from one or more inlet doors to one or more outlet doors along at least one movement path.

In other words, chain transport means are suitable for transporting support members, with their respective foodstuffs, arranged basically according to a single row, moving them vertically along said movement path.

It is noted that the expression "said movement path" means at least one movement path. According to possible embodiments there could also be two movement paths.

In accordance with one aspect of this disclosure, said oven comprises a circulation assembly configured to generate and circulate baking air jets along said movement path to bake, at least partially, said foodstuffs, and generation means configured to generate and emit saturated steam suitable for completing and/or enhancing the baking of said foodstuffs in said single chamber.

This has the advantage of being able to perform better baking of foodstuffs, which takes into account the final features of the baked foodstuffs.

The term "generation means" refers to devices capable of generating and then emitting saturated steam, such as boilers or other suitable heating and heat exchange means.

According to another aspect of the present disclosure, said circulation assembly comprises two or more air exchange devices configured at least to generate said air jets in said single chamber, and a plurality of diffusion channels fluidically connected to respective air exchange devices and arranged above and below said chain transport means, respectively, along said movement path to diffuse and transmit the heat of said air jets both towards said foodstuffs and towards the corresponding support members.

The combined use of air jets through the air exchangers and, in particular, saturated steam through the generation means is very advantageous because it allows increased heat of penetration on each foodstuff with a reduction of at least about 30% in the energy required for baking and a reduction of up to about 10% in baking time. This implies additional benefits such as increased productivity and substantial cost savings.

In particular, advantageously, air exchange devices are arranged on opposite sides of the arrangement of said transport means. This makes it possible to optimize the effect and function of air exchangers, as will be evident later.

Preferably, there are four air exchange devices, arranged externally at perimeter corners of the single chamber.

Preferably, generation means are arranged at least at a terminal part of said movement path.

More preferably, the generation means extend at least along the entire development of said terminal part of said movement path, so that saturated steam is emitted directly onto foodstuffs along said terminal part.

This significantly improves the baking process of foodstuffs without bringing gluten to crystallization, as saturated steam acts directly on them.

In accordance with embodiments, said generation means may be arranged at least at an initial part of said movement path to improve the initial baking of foodstuffs and, in particular, the color and texture of the crust. More preferably, the generation means extend at least along the entire development of said initial part of said movement path.

Advantageously, generation means can be arranged, alternatively, or in combination, at an initial part of said movement path and/or a terminal part of said movement path, wherein said initial part and said terminal part are determined with respect to a respective area, or position, of inlet of the foodstuffs into said single chamber.

Preferably, said movement path is defined by the arrangement of said chain transport means and comprises a plurality of curvilinear sections interposed to rectilinear sections that develop along the prevailing dimension of said single chamber, thus defining a helical shape.

Advantageously, diffusion channels are arranged at least along the entire extension of said rectilinear sections of said movement path. Such an arrangement of diffusion channels allows 80-85% of the movement path to be covered with highspeed air jets delivered directly onto foodstuffs, while the remaining 15-20% is covered by turbulent convention.

In this way, for each rectilinear and curvilinear section, there is an alternation between impinging air jets and turbulent convection. In particular, the energy to bake the foodstuffs will be advantageously provided by the thermal power deriving from the air jets for the rectilinear sections and by a turbulent upward convective flow for the curvilinear sections.

According to embodiments, said one or more inlet doors are arranged in a lower inlet area close to a floor of said single chamber and said one or more outlet doors are arranged in an outlet area close to a cover of said single chamber, whereby said support members, with said foodstuffs, are moved vertically in an ascending manner, thus using said saturated steam as an auxiliary source of penetration heat for said foodstuffs. In this case, said generation means are arranged for a length equal to at least 10% of the total length of said movement path.

According to other embodiments, said one or more inlet doors are arranged in an upper inlet area close to a cover of said single chamber and said one or more outlet doors are arranged in a lower outlet area close to a floor of said single chamber, whereby said support members, with said foodstuffs, are moved vertically in a descending manner, thus exploiting the natural phenomenon of heat stratification. In this case, said generation means are arranged for a length equal to at least 15% of the total length of said movement path.

According to embodiments, there may be two movement paths. Each movement path has an inlet door and an outlet door, respectively.

Advantageously, said circulation assembly comprises flow regulation members operationally associated with said plurality of diffusion channels and configured to regulate the air jets exiting therefrom so as to independently activate a first and/or a second group of said diffusion channels. In particular, said first group comprises the diffusion channels suitable for delivering descending air jets, thus downwards, with reference to a floor of said single chamber, for directly invest said foodstuffs. Furthermore, said second group comprises the diffusion channels suitable for delivering ascending air jets, thus upwards, with reference to a cover of said single chamber, to invest said support members. In this way, the downward jets heat and bake the foodstuffs directly, while the upward jets heat the support members so that the heat is transferred to the foodstuffs from below.

In other words, the diffusion channels are divided into a first and a second group which are designed to deliver or direct said air jets respectively downward, to directly impinge on the upper part of the foodstuff to be baked, and upward, to impinge on the lower part of the support members, and the regulating members connected to said air exchange devices are configured to independently activate the first and/or second group.

Furthermore, it should be noted that within this single chamber there is a natural convection that moves the warmer air upwards.

The presence of these diffusion channels designed to emit air jets downwards and upwards, in combination with the presence of chain transport means, is very advantageous in that it allows correct diffusion of heat towards the foodstuffs and towards the corresponding support members without substantially interposing a body that absorbs the heat transmitted by means of said air jets.

Moreover, preferably said circulation assembly also comprises extraction channels arranged in an upper central area of said single chamber, and recirculation channels arranged at the perimeter corners of said single chamber. Said extraction channels and recirculation channels are fluidically connected to corresponding air exchange devices and, in combination with said diffusion channels, promote the action of said air jets and allow to maximize the circulation of the latent heat of evaporation generated by the baking of said foodstuffs.

Advantageously, said air exchange devices are also configured to extract hot air and moisture from said single chamber through said extraction channels and to feed heated air into said single chamber through said recirculation channels.

The position of the air exchange units on opposite sides with respect to the transport means arrangement allows both optimizing the space inside the oven, facilitating its construction, and optimizing the circulation of latent evaporation heat, as they also have a function of recirculating the hot air inside the single chamber.

Furthermore, said single chamber is thermally insulated with respect to the outside and is delimited by perimeter walls each comprising an outer wall facing towards the external and an inner wall facing said single chamber, said outer wall and said inner wall being spaced from each other so as to define an air gap suitable for promoting correct heat dispersion on the corresponding perimeter wall.

Preferably, each perimeter wall comprises one or more sensors for detecting the temperature in said air gap, and one or more air exchange devices facing said air gap and configured to carry out an air exchange inside the latter upon reaching a limiting temperature detected by said sensors.

The present disclosure also relates to a method for baking baked foodstuffs which are arranged in respective support members, placing them on chain transport means of the single chamber, wherein said transport means individually transport said support members, with said foodstuffs, moving them vertically from one or more inlet doors to one or more outlet doors along a movement path.

During the movement of said support members, a circulation assembly, present in said single chamber, generates and circulates baking air jets along said movement path to bake, at least partially, said foodstuffs, and in a terminal part of said movement path generation means generate and emit saturated steam to complete and/or improve the baking of said foodstuffs.

Specifically, the method provides for two or more air exchange devices of said circulation assembly to generate said air jets and by means of a plurality of diffusion channels, arranged above and below said chain transport means along said movement path, diffuse and transmit the heat of said air jets both towards said foodstuffs and towards the corresponding support members.

According to possible embodiments, said transport means transport said support members, with said foodstuffs, along said movement path, moving them vertically in an ascending manner. In this case, said generation means generate and emit said saturated steam for a length equal to at least 10% of the total length of said movement path, wherein said saturated steam is used to complete the baking of foodstuffs and, in particular, to penetrate the innermost point, i.e., the center, of the foodstuff for precise removal of the moisture gradient, thus preventing gluten crystallization. It should be noted that the generation means that generate and emit said saturated steam are preferably arranged at the initial part of the movement path, with reference to the inlet area of the foodstuffs.

According to other possible embodiments, said transport means transport said support members, with said foodstuffs, along said movement path, moving them vertically in a descending manner to exploit the natural phenomenon of heat stratification, and said generation means generate and emit said saturated steam for a length equal to at least 15% of the total length of said movement path. It should be noted that the generation means generating and emitting said saturated steam are preferably arranged in the initial part of the movement path, with reference to the inlet area of the foodstuffs.

It is also noted that the initial and terminal parts of the movement path are determined with respect to the area, or position, of the inlet of foodstuffs into the single chamber.

Preferably, the method may provide for saturated steam to be generated and emitted in an initial part of said movement path by other generation means present therein, in order to improve the initial baking of said foodstuffs, in particular to improve the color and consistency of the crust.

Further, the method provides for flow regulating members of said circulation assembly to independently regulate the air jet exiting from a first and a second group of diffusion channels, wherein said first group comprises diffusion channels that deliver descending air jets, thus downwards, with reference to a floor of said single chamber, to directly invest on the foodstuffs, and wherein said second group comprises diffusion channels that deliver ascending air jets, thus upward, with reference to a cover of said single chamber, to directly invest on the support members.

The flow regulation of the first and second group of diffusion channels is very advantageous as it allows for increased heat exchange efficiency on foodstuffs.

In addition, in order to promote the action of said air jets and maximize the circulation of the latent heat of evaporation generated during baking of said foodstuffs, said air exchange devices, by means of extraction channels arranged at an upper central part of said single chamber, extract hot air and moisture from the latter, and, by means of recirculation channels arranged at the upper perimeter corners of said single chamber, introduce heated air into the latter.

### BRIEF DESCRIPTION OF THE DRAWINGS

Further advantages, features, and methods of use of the subject matter of the present disclosure will become apparent from the following detailed description of its embodiments, presented by way of example and not limitation, with reference to the figures of the accompanying drawings, wherein:
- Fig. 1 is a sectional side view of the industrial oven according to the present disclosure for baking foodstuffs;
- Fig. 2 is a sectional top view of the oven of Fig. 1;
- Fig. 3 is a sectional front view of the oven of Fig. 1;
- Fig. 4 is a sectional side view of a detail of the oven of Fig. 1.

It is also evident that each embodiment of the object of the present disclosure may have one or more of the advantages listed above; in any case, it is not required that each embodiment have all the listed advantages simultaneously.

### DETAILED DESCRIPTION OF FORMS OF IMPLEMENTATION

With reference to the attached figures, an industrial oven 10 according to this disclosure is designed and usable for baking foodstuffs 100 such as bread, croissants, biscuits, crackers or the like, arranged in respective support members 101.

Preferably, the support members 101 may be trays or baking pans, or they may be molds or similar, and therefore provided with appropriate housings or receptacles for the foodstuffs 100.

The oven 10 comprises a main structure 11 defining a chamber, or single chamber, 12 of baking foodstuffs 100 positioned in their respective support members 101.

Preferably, the single chamber 12 has a parallelepiped shape, with a predominant length dimension. It is clear that in possible embodiments, the single chamber 12 may have other shapes.

The single chamber 12 is thermally insulated from the outside and is bounded by perimeter walls 13 defined by several components.

Each perimeter wall 13 comprises an outer wall 15 facing outwards and an inner wall 16 facing the single chamber 12, which are spaced apart from each other so as to define an air gap 17 designed to promote proper heat dispersion on the corresponding perimeter wall 13.

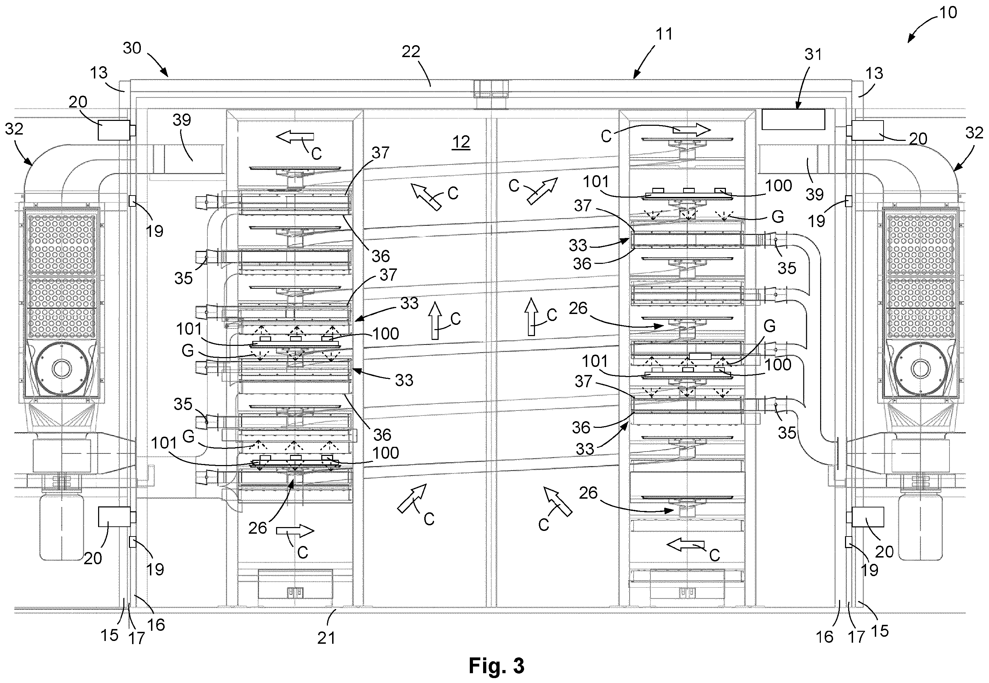

Preferably, each perimeter wall 13 may comprise one or more sensors 19 (fig. 3) for detecting the temperature in the air gap 17. In addition, each perimeter wall 13 may also comprise one or more air exchange devices 20 facing or protruding towards the air gap 17 and configured to exchange air within the latter when a limit temperature detected by said sensors 19 is reached. For example, this limit temperature may be approximately 80 °C.

This has the advantage of ensuring limited heat dispersion in the perimeter walls 13, maintaining their temperature uniform and avoiding the formation of hot spots inside the single chamber 12.

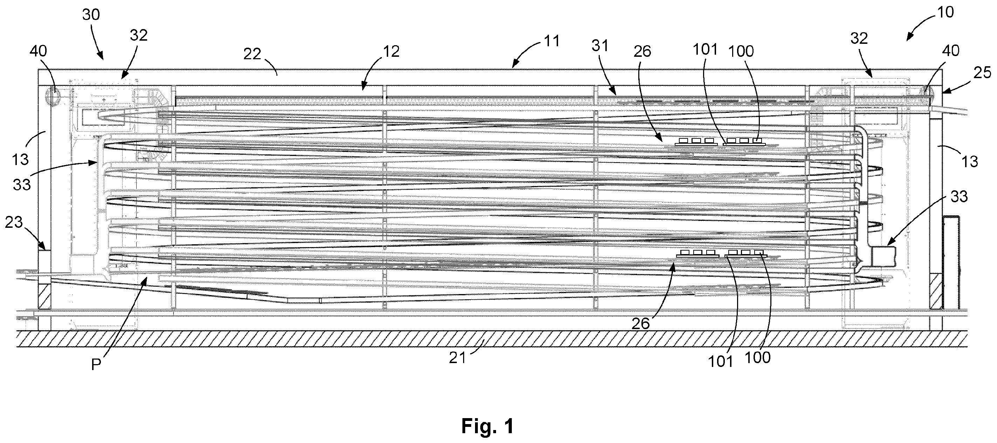

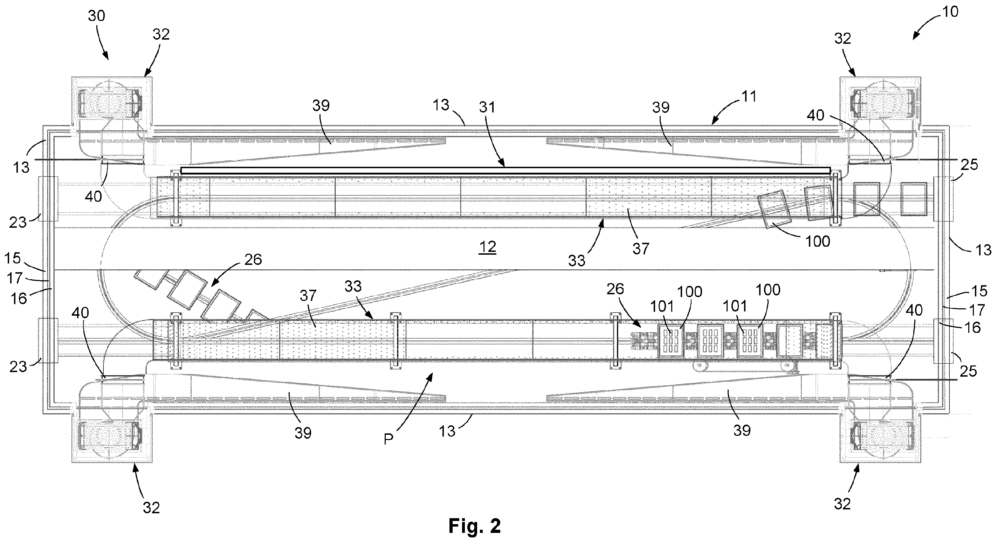

The single chamber 12 is also delimited by a floor 21 and a cover 22 (figs. 1 to 3).

The oven 10 (fig. 1) also comprises one or more inlet doors 23 and one or more outlet doors 25 to allow the support members 101 with the respective foodstuffs 100 to enter and exit the single chamber 12.

Preferably, there are two inlet doors 23 and two outlet doors 25. Furthermore, advantageously, the size of the inlet doors 23 and outlet doors 25 may be such as to allow only a single support member 101 to pass at a time, thus limiting the heat dispersion inside the chamber.

The single chamber 12 is of the vertical type and inside it there are chain transport means 26 (figs. 1 to 3) configured to transport the support members 101 individually, moving them vertically from the inlet doors 23 to the outlet doors 25 along a movement path P.

The expression "a/the movement path" refers to at least one movement path. According to possible forms of implementation, not illustrated in the drawings, there may be two or more movement paths P.

Preferably, the transport means 26 comprise a chain with permanent magnets. It is clear that according to other possible embodiments, the chain transport means 26 may be of another type.

The movement path P is defined by the arrangement of the chain transport means 26. For example, the movement path P comprises a plurality of consecutive curved sections and has a helical shape. Preferably, the path P comprises a plurality of curved sections interspersed with rectilinear sections which develop along the predominant dimension of the single chamber 12, also in this case essentially defining a helical shape.

According to preferred embodiments, the movement path P comprises a plurality of curved sections interposed between rectilinear sections along which most of the convective exchange takes place by means of air jets G, as will be described in detail below.

The coupling between the transport means 26 and the support members 101 can take place by means of coupling or connection elements, not visible in the drawings.

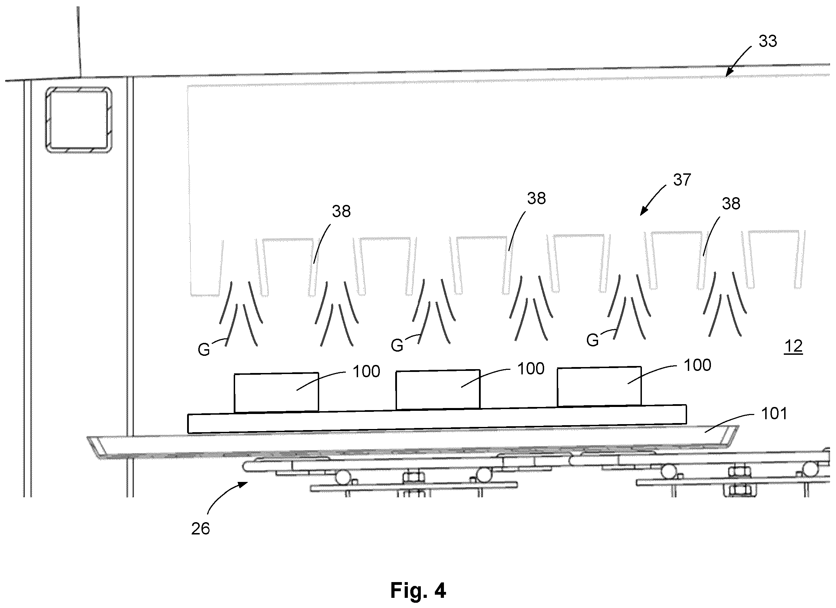

The oven 10 comprises a circulation assembly 30 (figs. 1, 2 and 3) configured to generate and circulate baking air jets, or flows, G along a corresponding movement path P to bake, at least partially, the foodstuffs 100. In other words, inside the single chamber 12 there is the circulation assembly 30 which is configured to generate and circulate air jets G that allow the foodstuffs 100 to be baked, at least partially. The air jets G are shown schematically in fig. 4.

Preferably, the baking air jets G (fig. 3) have a temperature that can be between approximately 180 °C and approximately 250 °C. Furthermore, these air jets G are emitted and circulated in the single chamber 12 at a high speed, preferably between approximately 4 m/s and approximately 18 m/s.

Furthermore, the oven 10 comprises generation means 31 (fig. 1) configured to generate additional saturated steam suitable for completing and/or improving the baking of the foodstuffs 100. Preferably, the generation means 31 are arranged at least at a terminal part of the respective or each movement path P.

More preferably, the generation means 31 extend at least along the entire development of the terminal part of the movement path P, so that the saturated steam is emitted directly onto the foodstuffs 100 along said terminal part. In other words, the generation means 31 extend so as to form a vaporization tunnel along the entire development of the terminal part of the movement path P.

In particular, this significantly improves the baking process of foodstuffs 100, as the saturated steam acts directly on them and allows the final moisture content of 5% to be achieved, for example by preventing crystallization phenomena that would make the foodstuff 100 fragile for the subsequent cooling and packaging stages.

According to other embodiments, the generation means 31 could be arranged in a tunnel extending outside the body of the single chamber 12. Inside this tunnel, chain movement/return means could be arranged to gain 3÷5% of additional length of the oven 10.

According to further embodiments, the generation means 31 may also be arranged at an initial part of the movement path P, extending along the entire development of said initial part, to improve the initial baking of the foodstuffs 100.

Advantageously, the generation means 31 can be arranged alternatively, or in combination, in the initial part and/or in the terminal part of the movement path P. It should be noted that the initial part and the terminal part of the movement path P are determined with respect to, or with reference to, a respective area, or position, of inlet of the foodstuffs 100 into the single chamber 12.

By way of example, but not limited to, the generation means 31 may comprise a boiler provided with supply ducts, not visible in the drawings. Alternatively, the generation means 31 may comprise other devices suitable for generating and supplying saturated steam. It should be noted that the generation means 31 are represented schematically and by way of example in the attached figures.

The term "saturated" means that the steam contains the maximum amount of water steam that can exist at a certain temperature and pressure without further changes in state.

The use of saturated steam is advantageous because it increases the heat penetration into the foodstuff, contributing to the formation of a better structure of the finished product (foodstuff). The term "heat penetration" refers to the heat that penetrates uniformly into the foodstuff, i.e., the heat that reaches the center of the foodstuff to ensure uniform baking.

For example, where the foodstuffs 100 are extruded "Taralli" or breadsticks, the use of saturated steam in the terminal part of the movement path P serves to prevent the crystallization of gluten and to bake the inside of the foodstuff to the desired final moisture value. In this way, the "Tarallo" or breadstick remains crumbly without the "straw" effect, where the outside is very thick and hard and the inside is underbaked and soft.

According to possible embodiments, illustrated by way of example in fig. 1, the inlet doors 23 may be arranged in a lower inlet area close to the floor 21 and the outlet doors 25 may be arranged in an upper outlet area close to the cover 22, whereby the support members 101 with the foodstuffs 100 are moved vertically upwards. In this way, the saturated steam is used as the main source of heat penetration into the foodstuffs 100 and the generation means 31 are arranged in said terminal part for a length equal to at least 10% of the total length of each movement path P.

According to other possible embodiments, the inlet doors 23 may be arranged in an upper inlet area close to the cover 22 and the outlet doors 25 may be arranged in a lower outlet area close to the floor 21, whereby said support members 101, with said foodstuffs 100, are moved vertically in a descending manner, thus exploiting the natural phenomenon of heat stratification. In this case, the generation means 31 are preferably arranged at the beginning of the movement path P, i.e. starting from the upper inlet area of the foodstuffs 100 close to the cover 22, for a length equal to at least 15% of the total length of each movement path P. This allows for an improved effect on the crust of the foodstuffs 100, improving their color and consistency.

The expression "natural phenomenon of heat stratification" refers to the phenomenon whereby heat stratifies in a fluid, such as air. More specifically, warmer air tends to rise while cooler air tends to sink.

It should be noted that the arrangement, or position, of the inlet doors 23 and outlet doors 25 can be determined by the area where the support members 101 are fed into the oven 10 and by the direction of travel of the chain transport means 26.

The circulation assembly 30 comprises two or more air exchange devices 32 configured at least to generate and circulate said air jets G in the single chamber 12.

Preferably, the air exchange devices 32 are arranged on opposite sides with respect to the arrangement of the transport means 26.

Even more preferably, but without limiting the generality, the circulation assembly 30 comprises four air exchange devices 32, arranged externally at the perimeter corners of the single chamber 12 (Fig. 1).

In particular, the circulation assembly 30 comprises a plurality of diffusion channels 33 which are fluidically connected to respective air exchange devices 32. The diffusion channels 33 are arranged respectively above and below the chain transport means 26 along the respective movement path P to diffuse and transmit the heat of said air jets G both towards the foodstuffs 100 and towards the corresponding support members 101.

The presence of chain transport means 26 is very advantageous in that it allows correct diffusion of heat towards the foodstuffs 100 and towards the corresponding support members 101 without substantially interposing a body which absorbs the heat transmitted by means of said air jets G.

Preferably, the diffusion channels 33 are arranged at least along the entire length of the rectilinear sections of the movement path P. This arrangement of the diffusion channels 33 allows 80-85% of the movement path P to be covered with highspeed air jets delivered directly onto the foodstuffs, while the remaining 15-20% is covered by turbulent convection.

In this way, the energy to bake the foodstuffs 100 will be advantageously provided by the heat power deriving from the air jets for the rectilinear sections and by a turbulent upward convective flow for the curved sections.

Furthermore, the presence of specific insulating perimeter walls 13 also allows the radiant heat to be managed because in the sections not covered by the diffusion channels 33 it is important to limit the effect of radiation from the perimeter surfaces of the oven 10. The circulation assembly 30 may comprise flow regulation members 35 (fig. 3) operatively associated with the diffusion channels 33 and the air exchange devices 32. Specifically, the regulation members 35 are arranged at the inlet of the diffusion channels 33.

The regulation members 35 are configured to regulate the air jet G exiting from said diffusion channels 33 so as to activate a first 36 and/or a second 37 group of diffusion channels 33 independently of each other, wherein the first group 36 comprises the diffusion channels 33 suitable for delivering descending air jets G, i.e. downward, with reference to the floor 21, to directly impinge on the foodstuffs 100, and wherein the second group 37 comprises diffusion channels 33 designed to deliver ascending air jets G, i.e. upward, with reference to the cover 22 of the single chamber 12, to directly impinge on the support members 101.

The possibility of selecting the activation of the first 36 and/or second 37 group of diffusion channels 33 allows for highly efficient heat exchange, also two or three times greater than that of state-of-the-art ovens. For example, in the rectilinear sections of the movement path P, heat exchange values of approximately 25 kWh/m² can be achieved, compared to 8 kWh/m² in typical cyclothermic radiant ovens for indirect baking of bakery products, while in the curved sections the heat exchange can be approximately 10 kWh/m².

The combined presence of the generation means 31 and the air exchange devices 32 defines a circulation assembly 30 that allows precise and accurate adjustment of the quality and quantity of steam to be reintroduced onto the foodstuffs P through the first 36 and/or second 37 group of diffusion channels 33.

Fig. 4 shows the diffusion channels 33, which are equipped with nozzles 38 designed to deliver the baking air jets G. Preferably, the nozzles 38 comprise diverging perimeter walls. The term "diverging" means that the walls of each nozzle diverge from the center as they move towards the outlet. In other words, the nozzles 38 have a structure that allows the air jet G to expand at the outlet of the respective nozzle 38.

Furthermore, the circulation assembly 30 also comprises extraction channels 39 and recirculation channels 40 (figs. 1 to 3) which are fluidically connected to the air exchange devices 32 and which, in combination with said diffusion channels 33, promote the action of said air jets G and maximize the circulation of the latent heat C of evaporation generated by the baking of said foodstuffs 100.

The expression "latent heat of evaporation" refers to the thermal energy required to convert the liquid water present in a foodstuff 100 into steam. In fact, when foodstuffs 100 are heated, the moisture inside them is heated and transformed into steam, contributing to the baking process. Advantageously, inside the single chamber 12, the latent heat C is only minimally extracted and dispersed, as it is used, or reused, to enrich the air jets G.

Preferably, the extraction channels 39 are arranged in a central upper area of the single chamber 12 to allow the extraction of hot air and humidity.

Preferably, the recirculation channels 40 are arranged at the upper corners of the single chamber 12 and are connected to the air exchange devices 32 to allow heated air to be fed into the single chamber 12. In addition to the heated air, a certain amount of steam can also be fed in.

In other words, the air exchange devices 32 are also configured to extract hot air and humidity from the single chamber 12 by means of the extraction channels 39 and to introduce heated air and, if necessary, steam into said single chamber 12 through the recirculation channels 40. To do this, the air exchange devices 32 may comprise two or more pumping members and corresponding fluid circuits, not visible in the drawings.

In this way, it is possible to modify the steam content inside the single chamber 12, as well as to quickly cool the oven 10 during specific operating phases. Furthermore, there is the advantage of guaranteeing optimal quality of the baking environment, ensuring uniform heat distribution and contributing to temperature control in said single chamber 12.

The single chamber 12 may also include an arrangement of a plurality of radiant tubes connected to each other and defining together a closed radiant circuit in which a heat transfer fluid flows to transmit radiant heat to the foodstuffs 100 to bake them, at least partially, in combination with the air jets G. Preferably, the heat transfer fluid is diathermic oil. For example, the radiant tubes can be arranged along the rectilinear sections of the initial part of the movement path P. This would allow the oven 10 to assume a so-called "hybrid" configuration, i.e., defined by a combination of a radiant circuit and diffusion channels for impinging air jets G.

The operation of the oven 10, which also corresponds to the method of baking foodstuffs 100 according to the present disclosure, is described below.

Initially, the foodstuffs 100 are placed on respective support members 101, which are fed into the single baking chamber 12.

The support members 101 are then positioned on chain transport means 26, which transport them individually into the single chamber 12, moving them vertically from the inlet doors 23 to the outlet doors 25 along a movement path P.

According to possible embodiments, the transport means 26 transport the support members 101 along said movement path P, moving them vertically in an ascending manner. This is particularly advantageous for the production of foodstuffs 100 with mixed leavening, known to those skilled in the art, for example for the production of puff pastry or yeast-free products, or which are preceded by a boiling stage such as "Taralli" or bagels.

According to other possible embodiments, the transport means 26 transport the support members 101 along the movement path P, moving them vertically in a descending manner to exploit the natural phenomenon of heat stratification. This is particularly advantageous for the production of foodstuffs 100 with chemical leavening, known to those skilled in the art, for example for the production of biscuits, shortbread and laminates, or with biological leavening, also known to those skilled in the art, for example for the production of baked goods.

During the movement of the support members 101, the circulation assembly 30 generates and circulates baking air jets G along the movement path P to bake the foodstuffs 100 at least partially. Furthermore, in a terminal part of a respective or each movement path P, the generation means 31 presents therein generate and emit saturated steam to complete and/or improve the baking of the foodstuffs 100. Alternatively, or in addition, in an initial part of a respective or each movement path P, the generation means 31 presents therein generate and emit saturated steam to improve the external appearance of the foodstuffs 100.

In particular, to bake the foodstuffs 100, the air exchange devices 32 generate and emit said air jets G and, by means of the plurality of diffusion channels 33, diffuse and transmit the heat deriving from said air jets G both towards the foodstuffs 100 and towards the corresponding support members 101.

The baking method also provides for the flow regulation members 35 to independently regulate the air jet G exiting from the first 36 and/or second 37 group of diffusion channels 33. In other words, during the movement of the foodstuffs 100, the first 36 and second 37 group of diffusion channels 33 can operate independently, regulating the air jets G emitted in relation to the requirements of use and the type of foodstuff 100.

Furthermore, to promote the action of the air jets G and maximize the circulation of latent heat C of evaporation generated during the baking of foodstuffs 100, the air exchange devices 32, by means of the extraction channels 39, extract hot air and humidity from the central area of the single chamber 12, and, by means of recirculation channels 40, introduce heated air and any additional steam generated specifically in the upper perimeter corners of the single chamber 12.

It should be noted that if the movement of the support members 101 is ascending, the generation means 31 generate and emit said saturated steam for a length equal to at least 10% of the total length of the respective movement path P, wherein said saturated steam is used as an auxiliary source of heat penetration into said foodstuffs 100 to complete their baking.

Instead, if the movement of the support members 101 is descending, the generation means 31, positioned starting from the upper inlet area(s) of foodstuffs 100, or in the initial part of the movement path P, generate and emit said saturated steam for a length equal to at least 15% of the total length of the respective movement path P.

In the case of certain foodstuffs 100, the method may also provide for the activation of a closed radiant circuit defined by radiant tubes in which a heat transfer fluid flows, transmitting radiant heat to the foodstuffs 100 to bake them, at least partially, in combination with said air jets G.

In accordance with the present disclosure, it is possible to produce an industrial oven 10 that allows the final features of the baked foodstuffs 100 to be taken into account, also optimizing the heat transfer in the single chamber 12.

The subject matter of this disclosure has been described above with reference to its embodiments. It is understood that other embodiments may exist that relate to the same inventive core, all falling within the scope of protection of the claims reported below.

### INDEX

- 10: oven
- 11: main structure
- 12: single chamber
- 13: perimeter walls
- 15: outer wall
- 16: inner wall
- 17: air gap
- 19: sensors
- 20: air exchange devices
- 21: floor
- 22: cover
- 23: inlet doors
- 25: outlet doors
- 26: transport means
- 30: circulation assembly
- 31: generation means
- 32: air exchange devices
- 33: diffusion channels
- 35: regulation members
- 36: first group
- 37: second group
- 38: nozzles
- 39: extraction channels
- 40: recirculation channels
- 100: foodstuff(s)
- 101: support members
- C: latent heat
- G: air jets
- P: movement path

## Claims

1. Industrial oven (10) for baking foodstuffs (100) arranged in respective support members (101), comprising:
- a baking single chamber (12) of vertical type provided with chain transport means (26) configured to individually transport said support members (101), with said foodstuffs (100), moving them vertically from one or more inlet doors (23) to one or more outlet doors (25) along at least one movement path (P),
- a circulation assembly (30) configured to generate and circulate baking air jets (G) along said movement path (P) to bake, at least partially, said foodstuffs (100), and
- generation means (31) configured to generate and emit saturated steam suitable for completing and/or improving the baking of said foodstuffs (100) in said single chamber (12),
**characterized in that** said circulation assembly (30) comprises two or more air exchange devices (32) configured at least to generate said air jets (G) in said single chamber (12), and a plurality of diffusion channels (33) fluidically connected to respective air exchange devices (32) and arranged above and below said chain transport means (26), respectively, along said movement path (P) to diffuse and transmit the heat of said air jets (G) both towards said foodstuffs (100) and towards the corresponding support members (101).

2. Oven (10) according to claim 1, **characterized in that** said two or more air exchange devices (32) are arranged on opposite sides of the arrangement of said transport means (26).

3. Oven (10) according to claim 1 or 2, **characterized in that** said generation means (31) are arranged at least at a terminal part of said movement path (P).

4. Oven (10) according to claim 3, **characterized in that** said generation means (31) extend at least along the entire development of said terminal part of said movement path (P), so that saturated steam is emitted directly onto foodstuffs (100) along said terminal part.

5. Oven (10) according to any one of the preceding claims, **characterized in that** said generation means (31) are arranged at least at an initial part of said movement path (P) and extend at least along the entire development of said initial part of said movement path (P) so that saturated steam is emitted directly onto foodstuffs (100) along said initial part.

6. Oven (10) according to any one of the preceding claims, **characterized in that** said generation means (31) are arranged, alternatively, or in combination, at an initial part of said movement path (P) and/or a terminal part of said movement path (P), wherein said initial part and said terminal part are determined with respect to a respective area, or position, of inlet of the foodstuffs (100) into said single chamber (12).

7. Oven (10) according to any one of the preceding claims, **characterized in that** said movement path (P) is defined by the arrangement of said chain transport means (26) and comprises a plurality of curvilinear sections interposed to rectilinear sections that develop along the prevailing dimension of said single chamber (12), thus defining a helical shape.

8. Oven (10) according to claim 7, **characterized in that** said diffusion channels (33) are arranged at least along the entire extension of said rectilinear sections of said movement path (P).

9. Oven (10) according to any one of the preceding claims, **characterized in that** said one or more inlet doors (23) are arranged in a lower inlet area close to a floor (21) of said single chamber (12) and said one or more outlet doors (25) are arranged in an outlet area close to a cover (22) of said single chamber (12), whereby said support members (101), with said foodstuffs (100), are moved vertically in an ascending manner, thus using said saturated steam as an auxiliary source of penetration heat for said foodstuffs (100), said generation means (31) being arranged for a length equal to at least 10% of the total length of said movement path (P).

10. Oven (10) according to any one of the preceding claims, **characterized in that** said one or more inlet doors (23) are arranged in an upper inlet area close to a cover (22) of said single chamber (12) and said one or more outlet doors (25) are arranged in a lower outlet area close to a floor (21) of said single chamber (12), whereby said support members (101), with said foodstuffs (100), are moved vertically in a descending manner, thus exploiting the natural phenomenon of heat stratification, said generation means (31) being arranged for a length equal to at least 15% of the total length of said movement path (P).

11. Oven (10) according to any one of the preceding claims, **characterized in that** said circulation assembly (30) comprises flow regulation members (35) operationally associated with said plurality of diffusion channels (33) and configured to regulate the air jets (G) exiting therefrom so as to independently activate a first (36) and/or a second (37) group of said diffusion channels (33), wherein said first group (36) comprises the diffusion channels (33) suitable for delivering descending air jets (G), thus downwards, with reference to a floor (21) of said single chamber (12), for directly invest said foodstuffs (100), and wherein said second group (37) comprises the diffusion channels (33) suitable for delivering ascending air jets (G), thus upwards, with reference to a cover (22) of said single chamber (12), to invest said support members (101).

12. Oven (10) according to any one of the preceding claims, **characterized in that** said circulation assembly (30) also comprises extraction channels (39) arranged in an upper central area of said single chamber (12), and recirculation channels (40) arranged at the perimeter corners of said single chamber (12), said extraction channels (39) and recirculation channels (40) being fluidically connected to corresponding air exchange devices (32) and, in combination with said diffusion channels (33), promote the action of said air jets (G) and allow to maximize the circulation of the latent heat (C) of evaporation generated by the baking of said foodstuffs (100), wherein said air exchange devices (32) are also configured to extract hot air and moisture from said single chamber (12) through said extraction channels (39) and to feed heated air into said single chamber (12) through said recirculation channels (40).

13. Oven (10) according to any one of the preceding claims, **characterized in that** said single chamber (12) is thermally insulated with respect to the outside and is delimited by perimeter walls (13) each comprising an outer wall (15) facing towards the external and an inner wall (16) facing said single chamber (12), said outer wall (15) and said inner wall (16) being spaced from each other so as to define an air gap (17) suitable for promoting correct heat dispersion on the corresponding perimeter wall (13).

14. Oven (10) according to claim 13, **characterized in that** each perimeter wall (13) comprises one or more sensors (19) for detecting the temperature in said air gap (17), and one or more air exchange devices (20) facing said air gap (17) and configured to carry out an air exchange inside the latter upon reaching a limiting temperature detected by said sensors (19).

15. Oven (10) according to any of the preceding claims, **characterized in that** in said single chamber (12) there is also a plurality of radiant tubes connected to each other and defining as a whole a closed circuit in which flows a heat transfer fluid suitable for transmitting radiant heat towards said foodstuffs (100) for baking them, at least partially, in combination with said air jets (G).

16. Method for baking foodstuffs (100) which are arranged in respective support members (101) and fed into a baking single chamber (12) of vertical type, placing them on chain transport means (26) of the latter, wherein said transport means (26) individually transport said support members (101), with said foodstuffs (100), moving them vertically from one or more inlet doors (23) to one or more outlet doors (25) along at least one movement path (P), wherein, during the movement of said support members (101) a circulation assembly (30) present in said single chamber (12) generates and circulates baking air jets (G) along said movement path (P) to bake, at least partially, said foodstuffs (100), and in a terminal part of said movement path (P) generation means (31) generate and emit saturated steam to complete and/or improve the baking of said foodstuffs (100), **characterized in that** it provides for two or more air exchange devices (32) of said circulation assembly (30) to generate said air jets (G) and by means of a plurality of diffusion channels (33), arranged above and below said chain transport means (26) along said movement path (P), diffuse and transmit the heat of said air jets (G) both towards said foodstuffs (100) and towards the corresponding support members (101).

17. Method according to claim 16, **characterized in that** said transport means (26) transport said support members (101), with said foodstuffs (100), along said movement path (P), moving them vertically in an ascending manner, and said generation means (31) generate and emit said saturated steam for a length equal to at least 10% of the total length of said movement path (P), wherein said saturated steam is used as an auxiliary source of penetration heat in said foodstuffs (100), wherein said generation means (31) extend at least along the entire development of said terminal part of said movement path (P), so that saturated steam is emitted directly onto foodstuffs (100) along said terminal part, and wherein said terminal part is determined with reference to a respective inlet area of the foodstuffs (100) in said single chamber (12).

18. Method according to claim 16, **characterized in that** said transport means (26) transport said support members (101), with said foodstuffs (100), along said movement path (P), moving them vertically in a descending manner to exploit the natural phenomenon of heat stratification, and said generation means (31) generate and emit said saturated steam for a length equal to at least 15% of the total length of said movement path (P), wherein said generation means (31) extend at least along the entire development of said initial part of said movement path (P), so that saturated steam is emitted directly onto foodstuffs (100) along said initial part, and wherein said initial part is determined with reference to a respective inlet area of the foodstuffs (100) in said single chamber (12).

19. Method according to any of claims 16 to 18, **characterized in that** also in an initial part of said movement path (P), generation means (31) generate and emit saturated steam to improve the initial baking of said foodstuffs (100).

20. Method according to any one of claims 16 to 19, **characterized in that** regulation members (35) of said circulation assembly (30) independently regulate the air jets (G) exiting of a first (36) and a second (37) group of diffusion channels (33), wherein said first group (36) comprises diffusion channels (33) which deliver descending air jets (G), thus downwards, with reference to a floor (21) of said single chamber (12), to directly invest the foodstuffs (100), and wherein said second group (37) comprises diffusion channels (33) which deliver ascending air jets (G), thus upwards, with reference to a cover (22) of said single chamber (12), to invest said support members (101).

21. Method according to any one of claims 16 to 20, **characterized in that,** in order to promote the action of said air jets (G) and maximize the circulation of the latent heat (C) of evaporation generated during baking of said foodstuffs (100), said air exchange devices (32), by means of extraction channels (39) arranged at an upper central part of said single chamber (12), extract hot air and moisture from the latter, and, by means of recirculation channels (40) arranged at the upper perimeter corners of said single chamber (12), introduce heated air into the latter.
